# EUROPEAN PATENT APPLICATION

(11) **EP 4 400 711 A1**
(43) Date of publication of application: **17.07.2024**
(21) Application number: 23151180.9
(22) Date of filing: 11.01.2023
(51) Int. Cl.: F02M 37/00, F02M 63/00, F02D 33/00, F02D 41/30, B60K 15/03

(54) **METHOD FOR OPERATING A PRESSURIZED FUEL RESERVOIR AND SYSTEM FOR FUEL SUPPLY**

(71) Applicant: TI Automotive Fuel Systems SAS, 51009 Châlons-en-Champagne (FR)
(72) Inventor: VELTIN, Dominique, 51240 ECURY SUR COOLE (FR); LARGESSE, Julien, 51 000 CHALONS EN CHAMPAGNE (FR); BOURNEL, Alain, 51 000 CHALONS EN CHAMPAGNE (FR); BENGHEZAL, Karim, 51 000 CHALONS EN CHAMPAGNE (FR); BARGUET, Fabien, 51 000 CHALONS EN CHAMPAGNE (FR)
(74) Representative: dompatent von Kreisler Selting Werner - Partnerschaft von Patent- und Rechtsanwälten mbB

(57) **Abstract**

The present invention provides a fuel supply system and a method for operating a pressurized fuel reservoir. The method for supplying fuel comprising the steps: ; monitoring a pressure of a fuel reservoir in a fuel tank; pressurizing the fuel reservoir by a spring element; delivering fuel requested by an engine from the fuel reservoir; if the pressure of the fuel reservoir is lower than or equal to a first preset value, pumping fuel from the fuel tank to the fuel reservoir until the pressure reaches or exceeds a second preset value, wherein the pressurized fuel reservoir comprises a compressed gas as a spring element.

## Description

The invention is related to a method for operating a pressurized fuel reservoir and a system for fuel supply.

It is known in the art that prior to the widespread adoption of electronic fuel injection, most carbureted automobile engines used mechanical fuel pumps to transfer fuel from the fuel tank into the fuel bowls of the carburetor. In modern vehicles the fuel pump is usually electric and located inside the fuel tank. The pump creates a pressure in the fuel lines, pushing the fuel to the engine. However, the use of electrical power results in an increased carbon dioxide emission. It becomes more and more difficult to meet both the performance requirements of the vehicles and the legal requirements regarding carbon dioxide emissions.

Current solutions for reducing electrical power consumption use pump control algorithms; Hereby the pump runs independently from the engine flow demand for covering the parasitic losses in the module (like jet pump feeding). E.g. in the Worldwide Harmonised Light Vehicles Test Procedure (WLTP) the average engine demand is lower than 2 lph for a vehicle meeting 95g CO2/km while the pump will have to deliver anyway at minimum 25-30 lph for stability and coverage of parasitic losses in the fuel supply system. This solution has a low efficiency and requests complex software and hardware.

Other solutions use a piston and a spring in the fuel supply system for pressure regulation within fuel reservoirs. However, this is a heavy solution with friction loses and high weight and mechanical complexity.

Thus, it is an object of the present invention to provide a method for operating the pressurized fuel reservoir and a fuel supply system comrising the pressurized fuel reservoir with a reduced electrical power consumption.

The present invention relates to a fuel supply system comprising a pressurized fuel reservoir and a method for operating a pressurized fuel reservoir.

A method for operating a fuel reservoir is provided. The method comprises the steps:
monitoring a pressure of the fuel reservoir in a tank, preferably, by a pressure sensor; whereby the fuel reservoir prefereably is an additional fuel capacity connected with the fuel tank. It may be located either inside or outside the fuel tank.
pressurizing the fuel reservoir by a spring element..
delivering fuel requested by an engine from the fuel reservoir by using the pressure therein. This delivering step is carried out without electrical consumption since the fuel reservoir has been pressurized before. After a delivery, the pressure of the fuel reservoir might still be high enough for another delivery of fuel. In such cases, the fuel reservoir might not need to be refilled or pressurized again.

if the pressure of the fuel reservoir is lower than or equal to a first preset value, pumping fuel from the fuel tank to the fuel reservoir until the pressure reaches or exceeds a second preset value, whereby the first preset value is lower than the second preset value. At a low level of pressure, the pump is energized to refill the fuel reservoir with the fuel from the fuel tank until the pressure sensor detects that a desired pressure value of the fuel reservoir is reached.

Thus, the pump is only running in short time periods when the fuel reservoir needs to be refilled. In other words, the electric pump does not need to work all the time when there is a fuel demand from the engine. Instead, the pressurized fuel reservoir does a part of the work without any electrical consumption. Thus, this helps to reduce the CO2 reduction.

According to the invention the fuel reservoir is pressurized by gas. Using gas as a spring element prevents the fuel supply system from unnecessary friction losses during fuel delivery and further is less mechanically complex and less expensive.

Preferably, the fuel reservoir is further pressurized by pumping air and/or an inert gas through an air port. The fuel reservoir can be further pressurized either by pumping additional fuel from the fuel tank to the fuel reservoir or by pumping air/inert gas through the air port. Of course, pumping air and/or inert gas and pumping fuel could also be applied in combination. The reason for pumping additional inert gas into the fuel reservoir is to reduce the risk of any undesired chemical reactions in the fuel system. The inert gas might be : helium (He), neon (Ne), argon (Ar), krypton (Kr), xenon (Xe) or other kind of gases that with very low chemical reactivity. Different inert gases could be either used alone or in combination.

Preferably, before delivering the fuel, the fuel reservoir is first pressurized by pumping air or inert gas into the reservoir until the pressure of the reservoir reaches or exceeds the first preset value and further pressurized by pumping fuel from the fuel tank to the fuel reservoir until the pressure of the fuel reservoir reaches or exceeds the second preset value which is the desired pressure value of the fuel reservoir. Then after the fuel is delivered, the pressure of the reservoir may drop to a value lower than or equal to the first preset value and the fuel reservoir is further pressurized by pumping fuel from the fuel tank until the pressure of the fuel reservoir reaches or exceeds the second preset value again. When pumping fuel from the fuel tank to the fuel reservoir, a volume of the gas is compressed, and the pressure of the fuel reservoir increases.

Optionally, the pressurized fuel reservoir may comprise an elastic air bag to separate the compressed gas and the fuel. When pressuring the fuel reservoir, the air and/or ingas is pumped into the elastic air bag to increase the pressure of the reservoir. Additionally, while pumping fuel from the fuel to the fuel reservoir, a volume of the elastic air bag is compressed so that the pressure further increases. By using the elastic air bag, the air and/or inert gas are separated from the fuel so as to avoid undesired chemical reaction and air bubbles in the fuel.

Preferably, the method further comprises adjusting the pressure of the fuel reservoir by a pressure limiter in order to reach a desired pressure. For example, if the pressure in the fuel reservoir is too high, the pressure can be lowered by releasing air in the fuel reservoir over the air port. If the pressure in the fuel reservoir is too low, additional air/inert gas or fuel might be pumped into the fuel reservoir.

Preferably, the method further comprises filtering the fuel. The filtering step might be performed before the fuel is pumped to the fuel reservoir. Alternatively, the filtering step might be performed when delivering fuel from the fuel reservoir to the engine.

Preferably, the fuel reservoir is pressurized by inert gas. As previously mentioned, if the fuel reservoir is pressurized by air, pumping additional inert gas into the reservoir might help raising the pressure of the reservoir and lowering the risk of undesired chemical reactions at the same time (since for example, the percentage of oxygen will be decreased). In this preferred embodiment, the fuel reservoir is merely pressurized by inert gas which makes it extremely difficult to have any chemical reactions in the fuel supply system. Therefore, the safety of the system can be further improved.

In another aspect of the present invention, a system for fuel supply is provided.

The system comprises:
a fuel tank,
a pressurized fuel reservoir 104 located in the fuel tank;
a pressure sensor 106 for monitoring the pressure of the fuel reservoir;
a fuel pump for transferring fuel from the fuel tankto the fuel reservoir, wherein the pressurized fuel reservoir comprises compressed gas as a spring element.

Preferably, the system further comprises a controller configured to operate the pressurized reservoir according to the above defined method.

Preferably, the system further comprises an air port connected with the pressurized fuel reservoir. Through the air port, the pressure of the fuel reservoir can be adjusted.

Preferably, the system further comprises a pressure limiter connected with the pressurized fuel reservoir.

Preferably, the system further comprises a filter. The filter can be a fine filter and the filter might be positioned at one end of the fuel pump. Alternatively, the filter might be positioned at the outlet of the fuel reservoir such that only the fuel flow to be delivered to the engine is filtered.

Preferably, the compressed gas is an inert gas.

Preferably, the pressurized reservoir comprises a separation element to split the reservoir into two chambers. One chamber is for the gas only and the other chamber is for the fuel only so that the fuel will not be mixed with the gas.

It is preferred that the separation element is a piston or a membrane or an elastic air bag.

In the following, preferred embodiments of the present invention are explained in the context of figures.
- Figure 1: Shows a first embodiment of the present invention.
- Figure 2: Shows a second embodiment of the present invnetion.
- Figure 3: Shows a flowchart of the method for operating the fuel reservoir.

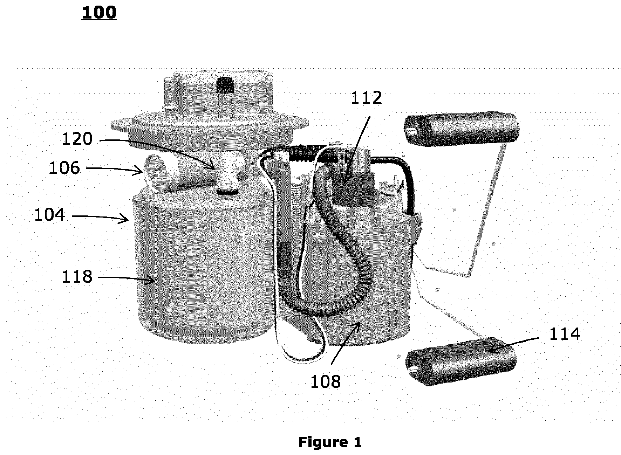

A first embodiment of the present invention is shown in Figure 1. Here, the fuel supply system 100 comprises a fuel tank 102 (not shown in the figure), a pressurized fuel reservoir 104 is connected with the fuel tank 102, a pressure sensor 106 for monitoring the pressure of the fuel reservoir 104, a fuel pump 108 for transferring fuel from the fuel tank 102 to the fuel reservoir 104, an air port 120 and a pressure limiter 110 connected with the pressurized fuel reservoir 104 so that the pressure of the fuel reservoir 104 can be adjusted by means of adjusting the air flow. A fine filter 112 connects the fuel tank 102 and the fuel pump 108. In this way the fuel pumped to the fuel reservoir 104 is filtered. A float 114 is located in the fuel tank 102 so that the residual volume of the fuel in the fuel tank 102 can be measured.

Preferably, the fuel supply further comprises a controller 116 (not depicted in the figure) to operate the pressurized fuel reservoir in accordance with the method described above. The controller 116 may located outside the fuel reservoir and establish electrical connection with it for the regulation.

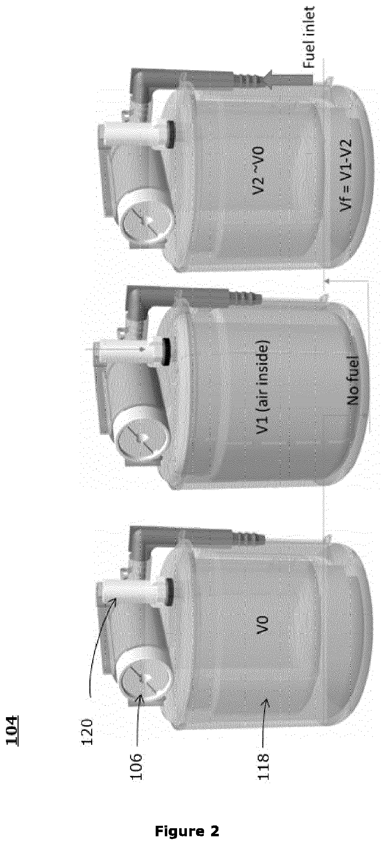

Figure 2 shows an detailed example of the present invention wherein the pressurized reservoir 104 comprises an elastic air bag 118 to separate the compressed gas and the fuel. The compressed gas is contained within the elastic air bag. Preferably, the air bag 118 is placed within the fuel reservoir 104 and is in communication with the air port 120.

As depicted in Figure 2, under an ambient pressure Pₐ, the elastic air bag has an initial volume V₀ smaller than the volume of the fuel reservoir V_{R}. When the fuel reservoir 104 is pressurized to a pressure value equal to or exceeds a first preset value P₁ by pumping air and/or inert gas, the elastic air bag 118 is expended to a volume V₁ > V₀. However, since the elastic air bag 118 is placed within the fuel reservoir 104, the expended volume V₁ cannot exceed the volume of the fuel reservoir V_{R}.

Then, when the fuel reservoir 104 is further pressurized by pumping fuel, the volume of the elastic air bag 118 and the gas contained inside are compressed until the pressure of the fuel reservoir increases to or exceeds a second preset value P₂. Optionally, when the pressure reaches or exceeds the second preset value, the volume of the elastic air bag V₂ is compressed to its initial value V₀, and the volume of the fuel V_{f} = V_{R} - V₂ = V₁ - V₀.

It can be derived that V₂ / V₁ = P₁ / P₂, Therefore, it is possible to decide the volume of the fuel reservoir and the amount of the pumped gas based on the desired preset pressure values or vice versa.

Advantageously, during delivering of the fuel, the compressed air and the elastic air bag 118 is expanded uniformly so that the pressure inside the fuel reservoir and in the fuel lines to the engine changes in a stable and uniform way and the output pressure for delivering the requested fuel to the engine remains in an acceptable range.

In a specific embodiment, the first preset pressure value may be 400 kPa and the second preset value may be 650 kPa.

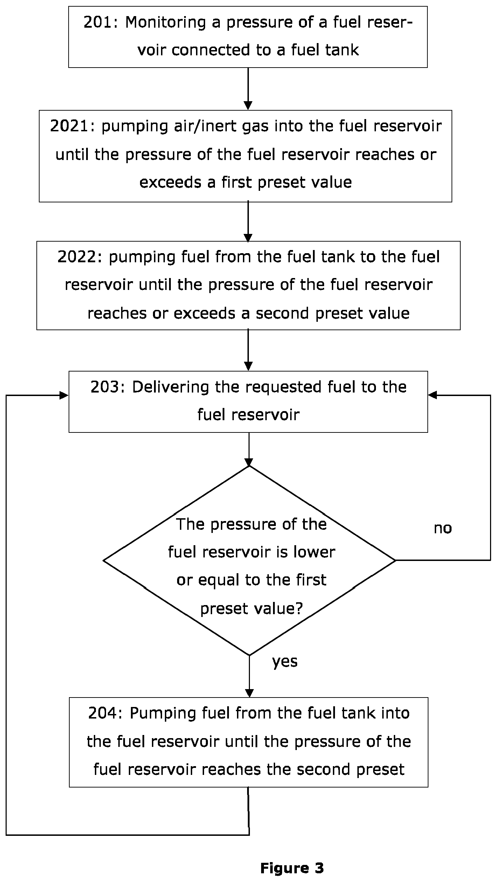

A flow chart of the method for operating the fuel reservoir according to the present invention is shown in Figure 3.

In step 201, a pressure of a fuel reservoir connected to a fuel tank is monitored, preferably by a sensor.

In step 202, the fuel reservoir is pressurized by a spring element;
In step 203, the requested fuel is delivered from the pressurized fuel reservoir to the engine.

In step 204, if the pressure of the fuel reservoir is lower than or equal to a first preset value, additional fuel is pumped from the fuel tank to the fuel reservoir until the pressure of the fuel reservoir reaches or exceeds a second preset value, wherein the pressurized fuel reservoir comprises a compressed gas as a spring element.

Specifically, after the fuel is pumped into the fuel reservoir and the pressure reaches or exceeds the second preset value, it can deliver the requested fuel to the engine again.

In a preferred embodiment, step 202 comprises two steps:
In step 2021, the fuel reservoir is first pressurized by pumping air/inert gas into the fuel reservoir until the pressure of the fuel reservoir reaches or exceeds the first preset value.

In step 2022, the fuel reservoir is further pressurized to a value equal to or exceeds the second preset value by pumping fuel into the fuel reservoir from the tank.

Optionally, step 2021 may be regarded as an initialization procedure for operating the fuel reservoir. It may only be performed once before using the fuel reservoir to deliver requested fuel to the engine. In some embodiments step 2021 can also be performed to adjust the pressure of the fuel reservoir during the usage. Optionally, step 202 may be performed before monitoring the pressure of the fuel reservoir.

## Claims

1. A method for operating a pressurized fuel reservoir comprising the steps:
monitoring a pressure of the fuel reservoir (S201) connected with a fuel tank;
pressurizing the fuel reservoir (S202) by a spring element;
delivering fuel requested by an engine from the fuel reservoir (S203);
if the pressure of the fuel reservoir is lower than or equal to a first preset value, pumping fuel from the fuel tank to the fuel reservoir until the pressure reaches or exceeds a second preset value (S204),
wherein the pressurized fuel reservoir comprises a compressed gas as a spring element
wherein the second preset value is higher than the first preset value.

2. The method in accordance to claim 1, wherein pressurizing (S202) the fuel reservoir by the spring element comprises:
pumping air (S2021) or inert gas into the reservoir until the pressure of the reservoir reaches or exceeds the first preset value; and
pumping fuel (S2022) from the fuel tank to the fuel reservoir until the pressure of the fuel reservoir reaches or exceeds the second preset value.

3. The method in accordance to claims 1 and 2, **characterized in that** the fuel reservoir is pressurized by pumping air or inert gas as the compressed gas through an air port into the reservoir.

4. The method in accordance to claims 1-3, **characterized in that** the fuel reservoir comprises an elastic air bag and air or inert gas is pumped into the elastic air bag.

5. The method in accordance to claims 1-4, **characterized in that** pumping fuel from the fuel tank to the fuel reservoir until the pressure reaches the second preset value comprises:
pumping fuel from the fuel tank to the fuel reservoir to compress a volume of the compressed gas until the pressure reaches or exceeds the second preset value.

6. The method in accordance to claims 1-5, **characterized in that** the method further comprises adjusting the pressure of the fuel reservoir by a pressure limiter.

7. The method in accordance to claims 1-6, **characterized in that** the method further comprising filtering the fuel.

8. The method in accordance to claims 1-7, **characterized in that** the fuel reservoir is pressurized with inert gas.

9. A fuel supply system comprising:
a fuel tank (102),
a pressurized fuel reservoir (104),
a pressure sensor (106),
a fuel pump (108) for transferring fuel from the fuel tank (102) to the fuel reservoir (104),
wherein the pressurized fuel reservoir comprises a compressed gas as a spring element.

10. The system in accordance to claim 9, **characterized in that** the system further comprises a controller (116) configured to operate the pressurized reservoir according to any of the claims 1-8.

11. The system in accordance to claim 9, **characterized in that** the system further comprises an air port (120) connected with the pressurized fuel reservoir (104).

12. The system in accordance to claims 9 - 11, **characterized in that** the system further comprises a pressure limiter (110) connected with the pressurized fuel reservoir (104).

13. The system in accordance to claims 9 - 12, **characterized in that** the system further comprises a filter (112).

14. The system in accordance to claims 9 - 13, **characterized in that** the compressed gas is inert gas.

15. The system in accordance to claims 9 - 14, **characterized in that** the pressurized reservoir comprises a separation element to split the reservoir into two chambers preferably, the separation element is a piston or a membrane or an elastic air bag.
